# DEMANDE DE BREVET EUROPEEN

(11) **EP 4 760 789 A1**
(43) Date de publication de la demande: **17.06.2026**
(21) Numéro de dépôt: 25221667.6
(22) Date de dépôt: 09.12.2025
(51) Int. Cl.: H01M 4/04, H01M 4/134, H01M 4/1395, H01M 4/38, H01M 10/0525, H01M 10/0562, H01M 4/62, H01M 4/02

(54) **ELÉMENT ÉLECTROCHIMIQUE POUR BATTERIES TOUT SOLIDE COMPRENANT UNE ÉLECTRODE NÉGATIVE COMPRENANT DU SILICIUM**

(30) Priorité: 10.12.2024 FR 2413795
(71) Demandeur: SAFT, 92300 Levallois-Perret (FR)
(72) Inventeur: GUERIN, Elodie, 33140 VILLENAVE D'ORNON (FR); MOSCOVICI MIRANDE, Maïlys, 33520 BRUGES (FR)
(74) Mandataire: Lavoix

(57) **Abrégé**

La présente invention concerne un élément électrochimique de type tout solide comprenant une électrode positive, une électrode négative et une couche d'électrolyte solide sulfure. L'électrode négative comprend une couche de matériau d'électrode négative comprenant des particules d'un électrolyte solide sulfure **ES₁** présentant un diamètre médian **Dv50ES₁** et des particules comprenant du silicium présentant un diamètre médian **Dv50Si** dans un rapport **Dv50ES₁/Dv50Si** qui est compris dans une gamme allant de 1,6 à 2,5.

## Description

### DOMAINE TECHNIQUE

La présente invention concerne le domaine du stockage de l'énergie, plus précisément les accumulateurs/batteries de type tout solide au lithium. Plus particulièrement, la présente invention concerne un élément électrochimique de type tout solide comprenant une électrode négative en silicium dont la configuration permet d'augmenter les performances électrochimiques des accumulateurs.

### ETAT DE LA TECHNIQUE

Le fonctionnement des accumulateurs au lithium est basé sur l'échange réversible de l'ion lithium entre une électrode positive et une électrode négative, séparées par un séparateur contenant un électrolyte, le lithium étant emmagasiné à l'électrode négative pendant le fonctionnement en charge.

Afin d'augmenter les densités énergétiques des accumulateurs au lithium, il a été proposé d'utiliser des électrodes négatives comprenant du silicium, le silicium possédant une capacité 10 fois supérieure à celle du graphite communément employé dans les batteries lithium-ion (Li-ion).

Les accumulateurs de type tout solide sont une prochaine étape prometteuse de la technologie Li-ion en termes de sécurité et de densité énergétique. La technologie tout solide est basée sur le remplacement de l'électrolyte liquide par un électrolyte solide ininflammable et plus stable thermiquement. La technologie tout solide offre donc une sécurité accrue. L'électrolyte solide peut en particulier être un électrolyte sulfure.

Cependant, des défis technologiques doivent encore être surmontés en raison de la nature solide des composants de la batterie. L'un d'eux est d'assurer une interface continue entre les électrodes négatives/positives et la couche d'électrolyte solide (SEL, acronyme de « Solid Electrolyte Layer ») pour permettre une bonne diffusion des ions lithium et maintenir de bonnes performances électrochimiques (e.g. cyclabilité). Il est d'autant plus difficile d'assurer une interface continue lorsqu'il est fait usage d'électrodes négatives à base de silicium. En effet, l'intercalation/désintercalation du lithium au sein du silicium s'accompagne d'une forte expansion volumique de celui-ci, de l'ordre de 300%. Cette forte expansion volumique va être à l'origine de la dégradation des éléments électrochimiques.

D'une part, une dégradation de l'intégrité de l'électrode négative peut être observée conduisant à une diminution de son utilisation. D'autre part, une fracture à l'interface entre l'électrolyte et les électrodes peut être observée avec une perte de contact et une possible dégradation au niveau des points de contacts entre les particules de silicium et de l'électrolyte sulfure.

Ainsi, un besoin demeure pour la mise à disposition d'une solution permettant d'augmenter les performances électrochimiques (e.g. cyclabilité) des accumulateurs Li-ion à électrode négative comprenant du silicium, en particulier en permettant d'augmenter la stabilité de l'interface électrode-électrolyte, mais aussi la stabilité entre les particules de silicium et de l'électrolyte sulfure au sein de l'électrode négative, afin d'assurer une diffusion continue du lithium entre l'électrode négative et la SEL et une réduction des problèmes de contact pendant la charge/décharge à l'interface électrode-électrolyte.

### RESUME DE L'INVENTION

La présente invention porte sur un élément électrochimique de type tout solide comprenant une électrode positive, une électrode négative et une couche d'électrolyte solide sulfure comprenant des particules d'un électrolyte sulfure **ES₀** séparant l'électrode positive et l'électrode négative,
dans lequel l'électrode négative comprend un collecteur de courant et une couche de matériau d'électrode négative appliquée sur au moins une face du collecteur, ladite au moins une face faisant face à la couche d'électrolyte solide sulfure,
dans lequel la couche de matériau d'électrode négative comprend au moins:
   - des particules d'un électrolyte solide sulfure **ES₁** et présentant un diamètre médian **Dv50ES₁,**
   - des particules comprenant du silicium et présentant un diamètre médian **Dv50Si,**
   - un liant, et
   - éventuellement un additif carboné conducteur électronique;
caractérisé en ce que le rapport **Dv50ES₁/Dv50Si** est compris dans une gamme allant de 1,6 à 2,5, de préférence de 1,8 à 2,2, les diamètres médians étant déterminés par granulométrie à diffraction laser.

La présente invention porte également sur un procédé de préparation d'un élément électrochimique de type tout solide selon l'invention comprenant les étapes suivantes :
a. préparation d'une électrode négative par application sur au moins une face d'un collecteur de courant d'une couche de matériau d'électrode négative comprenant au moins:
   ∘ des particules d'un électrolyte solide sulfure **ES₁** et présentant un diamètre médian **Dv50ES₁,**
   o des particules comprenant du silicium et présentant un diamètre médian **Dv50Si,**
   o un liant, et
   o éventuellement un additif carboné conducteur électronique,
   le rapport **Dv50ES₁/Dv50Si** étant compris dans une gamme allant de 1,6 à 2,5, de préférence de 1,8 à 2,2, les diamètres médians étant déterminés par granulométrie à diffraction laser ; et
b. Soit superposition de l'électrode négative, de la couche d'électrolyte solide et de l'électrode positive pour donner un élément électrochimique de type tout solide ;
c. Soit enduction d'une couche d'électrolyte solide sur l'électrode négative et/ou l'électrode positive et superposition de l'électrode négative et de l'électrode positive pour donner un élément électrochimique de type tout solide.

Enfin, l'invention porte sur l'utilisation d'un élément électrochimique selon l'invention pour maintenir une rétention de capacité d'au moins 80% après au moins 150 cycles de charge/décharge.

D'autres aspects de l'invention sont tels que décrits ci-après.

### FIGURES

[Fig 1] La figure 1 représente de manière schématique un élément électrochimique tout solide selon la présente invention.
[Fig. 2] La figure 2 représente une évaluation des performances en cyclage d'une électrode négative selon l'invention et d'une électrode négative hors invention.
[Fig 3] La figure 3 représente de manière schématique l'interface entre la SEL et l'électrode négative d'un élément électrochimique selon un mode de réalisation particulier de l'invention (les particules d'électrolyte solide sulfure **ES₀** présentent un diamètre médian **Dv50ES₀** tel que le rapport **Dv50ES₀/Dv50Si** est compris dans une gamme allant de 0,5 à 1,5).
[Fig. 4] La figure 4 représente une évaluation des performances en cyclage d'une électrode négative selon l'invention et d'une électrode négative hors invention.

### DESCRIPTION DETAILLEE DE L'INVENTION

Les inventeurs ont découvert qu'en choisissant de manière appropriée les tailles des particules de l'électrolyte solide sulfure et des particules comprenant du silicium de l'électrode négative d'un élément électrochimique, il pouvait être tiré profit du gonflement du silicium pour former une interface continue entre la SEL et l'électrode négative et ainsi répondre au besoin ci-dessus exprimé.

Ainsi, la présente invention porte sur un élément électrochimique de type tout solide comprenant une électrode positive, une électrode négative et une couche d'électrolyte solide sulfure comprenant des particules d'un électrolyte sulfure **ES₀** séparant l'électrode positive et l'électrode négative. L'électrode négative comprend un collecteur de courant et une couche de matériau d'électrode négative appliquée sur au moins la face du collecteur faisant face à la couche d'électrolyte solide sulfure. La couche de matériau d'électrode négative comprend au moins :
- des particules d'un électrolyte solide sulfure **ES₁** présentant un diamètre médian **Dv50ES₁,**
- des particules comprenant du silicium et présentant un diamètre médian **Dv50Si,**
- un liant, et
- éventuellement un additif carboné conducteur électronique.

Le rapport **Dv50ES₁/Dv50Si** est compris dans la gamme allant de 1,6 à 2,5, de préférence allant de 1,8 à 2,2.

Le diamètre médian « Dv50 » désigne le diamètre pour lequel 50% en volume des particules ont un diamètre équivalent inférieur ou égal à la valeur considérée et 50 % en volume des particules ont un diamètre équivalent supérieur à la valeur considérée. L'expression « diamètre équivalent » désigne le diamètre d'une sphère possédant le même volume que cette particule. La mesure/détermination des diamètres médians est effectuée par la technique de granulométrie à diffraction laser. Plus particulièrement, la mesure des diamètres peut être effectuée en utilisant un appareil de granulométrie de type Malvern Mastersizer 2000 utilisant une technique de diffraction laser, les échantillons sont dispersés dans un solvant.

L'expression « élément électrochimique » désigne une cellule électrochimique élémentaire constituée de l'assemblage électrode positive/couche d'électrolyte solide (SEL)/électrode négative, permettant d'emmagasiner l'énergie électrique fournie par une réaction chimique et de la restituer sous forme de courant.

Les différents composants de l'élément électrochimique de la présente invention sont tels que décrits ci-après.

### Electrode négative

Le terme « électrode négative » désigne, lorsque l'accumulateur est en décharge, l'électrode fonctionnant en tant qu'anode, l'anode étant définie comme l'électrode où a lieu une réaction électrochimique d'oxydation (émission d'électrons). Le terme électrode négative désigne également l'électrode d'où partent les électrons, et d'où sont libérés les cations (Li+) en décharge.

L'électrode négative comprend un collecteur de courant et une couche de matériau d'électrode négative.

Le terme « collecteur de courant » désigne communément un élément tel que plot, plaque, feuille ou autre, de structure 2D ou 3D, en matériau conducteur (également désigné « support conducteur »), relié à une électrode (positive ou négative), assurant la conduction du flux d'électrons entre l'électrode et les bornes de la batterie.

La nature des collecteurs de courant convenant à l'invention n'est pas limitée. Les collecteurs de courant classiquement utilisés pour les électrodes négatives pour les éléments électrochimiques au lithium peuvent ainsi être envisagés.

Le collecteur de courant est de préférence un support conducteur bidimensionnel tel qu'un feuillard plein ou perforé, à base de métal, par exemple en cuivre, en nickel, en acier, en acier inoxydable ou en aluminium. Le support conducteur peut être constitué d'un alliage à base de cuivre, d'aluminium ou d'un alliage à base d'aluminium, d'acier inoxydable.

Le collecteur de courant à l'électrode négative se présente généralement sous forme d'un feuillard de cuivre.

Le collecteur de courant est revêtu d'une couche de matériau d'électrode négative. La couche de matériau d'électrode négative est au moins appliquée sur la face du collecteur de courant faisant face à la SEL. Dans certains modes de réalisation, la couche de matériau d'électrode négative peut être appliquée sur les deux faces du collecteur de courant.

La couche de matériau d'électrode négative comprend au moins :
- des particules d'un électrolyte solide sulfure **ES₁** présentant un diamètre médian **Dv50ES₁,**
- des particules comprenant du silicium et présentant un diamètre médian **Dv50Si** à titre de matière active,
- un liant, et
- éventuellement un additif carboné conducteur électronique.

Dans certains modes de réalisation, la couche de matériau d'électrode négative est constituée des composants ci-dessus mentionnés.

L'expression « électrolyte solide sulfure » désigne les électrolytes solides à base de soufre typiquement utilisés pour la fabrication des batteries tout solide.

La nature chimique des électrolytes solides sulfures convenant à l'invention n'est pas limitée. Les composés habituellement utilisés à titre d'électrolyte solide peuvent être utilisés ici. Ainsi, à titre d'électrolyte solide, peuvent être cités les composés soufrés seuls ou en mélange avec d'autres constituants. Plus particulièrement, peuvent être cités les électrolytes de type oxyde, les sulfures partiellement ou complètement cristallisés ainsi que les sulfures amorphes.

Des exemples illustratifs d'électrolytes sulfures sont décrits par Park, K. h. et al (2018), Design Strategies, Practical Considerations, and New Solution Processes of Sulfide Solid Electrolytes for All-Solid-State Batteries. Advanced Energy Materials, 1800035.

Par exemple, l'électrolyte solide sulfure **ES₁** peut être sélectionné parmi les sulfures de composition A Li₂S - B P₂S₅ (avec 0<A<1 ,0<B<1 et A+B = 1) et leurs dérivés (par exemple avec dopage Lil, LiBr, LiCl, Li₂O, SiS₂, GeS₂, SnS₂, ZnS, Li₃PO₄...) ; les sulfures de structure argyrodite ; ou les sulfures ayant une structure cristallographique similaire au composé LGPS (Li₁₀GeP₂S₁₂), et leurs dérivés.

L'électrolyte solide sulfure **ES₁** peut en particulier être choisi parmi :
- Li₃PS₄
- l'ensemble des phases [(Li₂S)_{y} (Li₂O)ₜ(P₂S₅)_{1-y-t}]_{(1-z)}(LiX)_{z}, avec X représentant un ou plusieurs éléments halogène et 0≤y≤1; 0≤z≤1; 0≤t≤1 ;
- les composés ayant une structure argyrodite tels que Li₆PS₅X, avec X représentant Cl, Br ou I, ou Li₇P₃S₁₁ ;
- les électrolytes sulfures ayant la structure cristallographique équivalente au composé Li₁₀GeP₂S₁₂ incluant par exemple des substitutions, dopages et/ou lacunes ;
- les phases [(Li₂S) _{y}(P₂S₅)_{1-y}]_{(1-z)}(LiX)_{z} (avec X choisi parmi les halogène; 0<y<1; 0<z<1),
- (Li₃PS₄)_{0.8}(LiI)_{0.2}.

De préférence, l'électrolyte solide sulfure **ES₁** est un électrolyte de type Li₆PS₅X avec X représentant CI, Br ou I, ou un de leurs mélanges.

Les particules comprenant du silicium peuvent être des particules constituées de silicium, c'est-à-dire des particules comprenant exclusivement du silicium (Si), ou être des particules composites silicium-carbone (Si-C) ou encore des particules d'oxyde de silicium SiOₓ où 0<x<2.

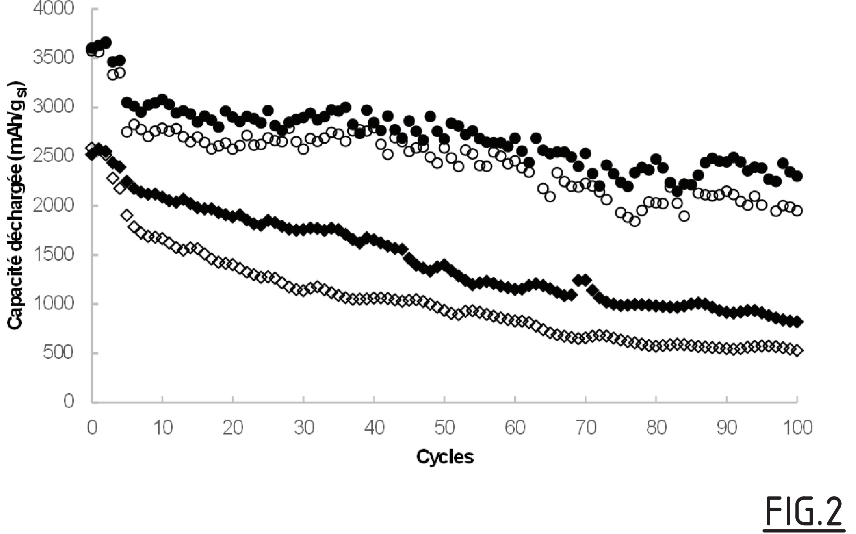

Les particules comprenant du silicium utiles dans le cadre de le présente invention présentent un diamètre médian **Dv50Si** tel que le rapport entre le diamètre médian des particules de l'électrolyte solide sulfure **ES₁** et le diamètre médian particules comprenant du silicium **(Dv50ES₁/Dv50Si)** est compris dans la gamme allant de 1,6 à 2,5. Le rapport **Dv50ES₁/Dv50Si** est de préférence compris dans la gamme allant de 1,8 à 2,2. Il a été découvert que lorsque le rapport **Dv50ES₁/Dv50Si** est compris dans de telles gammes, les électrodes négatives présentent une meilleure cyclabilité (voir figure 2). Il est entendu que le diamètre médian des particules comprenant du silicium est mesuré à l'état initial, c'est-à-dire non chargé.

Dans certains modes de réalisation, le diamètre médian **Dv50Si** des particules comprenant du silicium est compris dans la gamme allant de 1 à 10 µm, de préférence de 2 à 5 µm.

La couche de matériau d'électrode négative comprend un liant. Il est entendu que cette couche peut comprendre un mélange de liants.

Le terme « liant » désigne les agents permettant de conférer à la composition et/ou l'électrode la cohésion des différents composants et sa tenue mécanique et son adhésion sur le collecteur de courant. A titre de liants, peuvent être cités les polymères tels que le polyfluorure de vinylidène (PVDF) et ses copolymères (ex. copolymère de polyfluorure de vinylidène et hexafluoropropylène (PVDF-HFP)), le polytétrafluoroéthylène (PTFE) et ses copolymères, le polyacrylonitrile (PAN), le poly(méthyl) ou (butyl)méthacrylate, le polychlorure de vinyle (PVC), le poly(vinyl formal), le polyester, les polyéthers blocs amides, les polymères d'acide acrylique, d'acide méthacrylique, d'acrylamide, d'acide itaconique, d'acide sulfonique, les élastomère (ex. poly(styrène/butadiène) (SBR) et copolymères butadiène-acétonitrile hydrogénés (HNBR)), et les composés cellulosiques (ex. carboxymethyl cellulose (CMC)).

La couche de matériau d'électrode négative peut comprendre un additif carboné conducteur électronique. Cet additif carboné est typiquement réparti dans l'électrode de manière à former un réseau percolant électronique entre le silicium et le collecteur de courant. L'additif carboné est généralement choisi parmi le graphite, le noir de carbone, le noir d'acétylène, la suie, le graphène, les nanotubes de carbone, les fibres de carbone, telles que les fibres de carbone vapodéposées (VGCF) ou un mélange de ceux-ci.

La couche de matériau d'électrode négative comprend généralement :
- de 5 à 60%, de préférence de 25 à 50%, de préférence de 40 à 50% en poids de particules d'un électrolyte solide sulfure ES₁,
- de 40 à 94,5%, de préférence de 40 à 70%, en poids de particules comprenant du silicium,
- de 0,5 à 10%, de préférence de 1 à 8%, en poids d'un liant, et
- éventuellement de 0,1 à 5%, de préférence de 0,1 à 4%, en poids d'un ou plusieurs additif(s) carboné(s) conducteur(s) électronique(s),
les % en poids étant exprimés par rapport au poids total de la couche de matériau d'électrode négative.

Avant que le collecteur de courant ne soit revêtu de la couche de matériau d'électrode négative, il peut être revêtu, sur l'une de ses faces ou sur ses deux faces, d'un revêtement destiné à améliorer la conductivité électronique entre la couche de matériau d'électrode négative et le support conducteur. Le matériau de revêtement peut être choisi dans le groupe constitué par le carbone amorphe, le graphite, les fibres de carbone, les nanotubes de carbone et leurs mélanges.

L'électrode négative présente généralement une épaisseur comprise dans la gamme allant de 10 à 60 µm, de préférence de 10 à 40 µm. L'épaisseur de l'électrode négative peut être mesurée, avant assemblage de l'élément électrochimique, au moyen d'un mesureur d'épaisseur (ou instrument de mesure de précision) de type Palmer. Après assemblage de l'élément électrochimique, la mesure de l'épaisseur de l'électrode négative peut être réalisée par microscopie électronique à balayage (MEB).

### Couche d'électrolyte solide sulfure (SEL)

La nature chimique des électrolytes solides sulfures **ES₀** convenant à la SEL n'est pas limitée. Ainsi, les électrolytes solides sulfures précédemment décrits en lien avec l'électrode négative peuvent être utilisés. Par exemple, l'électrolyte solide sulfure **ES₀** peut être sélectionné parmi les sulfures de composition A Li₂S - B P₂S₅ (avec 0<A<1 ,0<B<1 et A+B = 1) et leurs dérivés (par exemple avec dopage Lil, LiBr, LiCl,...) ; les sulfures de structure argyrodite ; ou les sulfures ayant une structure cristallographique similaire au composé LGPS (Li₁₀GeP₂S₁₂), et leurs dérivés.

L'électrolyte solide sulfure **ES₀** de la SEL peut être de même nature chimique que l'électrolyte solide sulfure **ES₁** de l'électrode négative ou être de nature chimique différente. En d'autres termes, les formules chimiques de l'électrolyte solide sulfure **ES₀** et **ES₁** peuvent être identiques ou différentes.

Le diamètre médian **Dv50ES₀** des particules de l'électrolyte solide sulfure **ES₀** de la SEL peut être égal à celui des particules de l'électrolyte solide sulfure **ES₁** de l'électrode négative, ou être différent, que ce soit inférieur ou supérieur. Dans l'ensemble de ces modes de réalisation, l'électrolyte solide sulfure **ES₀** de la SEL peut être de même nature chimique que l'électrolyte solide sulfure **ES₁** de l'électrode négative ou être de nature chimique différente. Ainsi, les électrolytes sulfures **ES₁** et **ES₀** peuvent être, indépendamment l'un de l'autre, sélectionnés dans le groupe constitué par les sulfures de composition A Li₂S - B P₂S₅ avec 0<A<1 ,0<B<1 et A+B = 1 et leurs dérivés (par exemple avec dopage Lil, LiBr, LiCl, ...) ; les sulfures de structure argyrodite ; les sulfures ayant une structure cristallographique similaire.

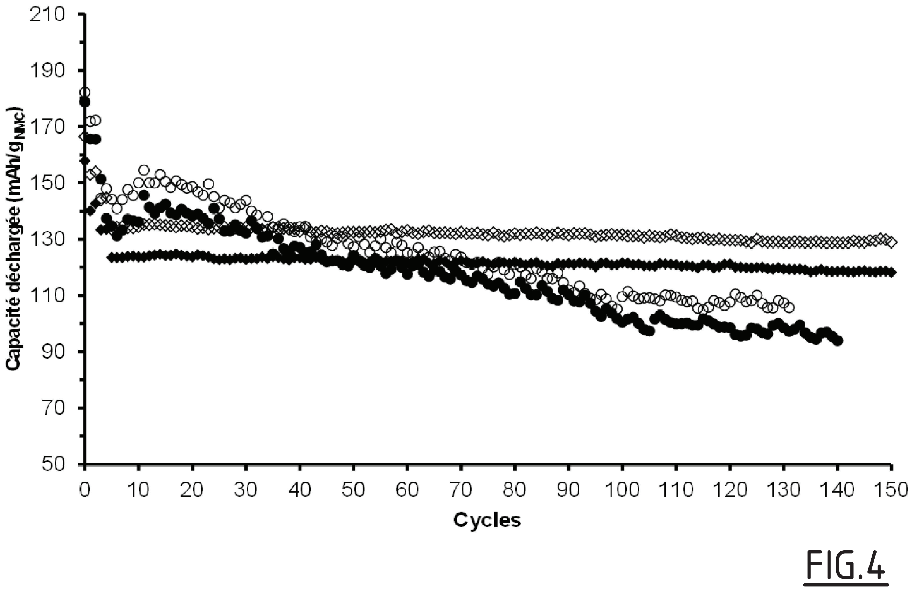

Dans certains modes de réalisation, la SEL comprend, ou est constituée, de particules d'électrolyte solide sulfure **ES₀** présentant un diamètre médian **Dv50ES₀** tel que le rapport **Dv50ES₀/Dv50Si** est compris dans une plage allant de 0,5 à 1,5, de préférence allant de 0,8 à 1. Le rapport **Dv50ES₀/Dv50Si** peut notamment être égal à 1. Il a été mis en évidence que de tels modes de réalisation présentent une meilleure cyclabilité (voir figure 4). Dans ces modes de réalisation, l'électrolyte solide sulfure **ES₀** de la SEL et l'électrolyte solide sulfure **ES₁** de l'électrode négative peuvent être de même nature chimique ou de nature chimique différente.

Outre les particules d'électrolyte solide sulfure **ES₀,** la SEL peut comprendre des particules d'un électrolyte solide sulfure **ES₂.** Les particules d'électrolyte solide sulfure **ES₀** sont différentes des particules d'un électrolyte solide sulfure **ES₂** par la nature chimique de l'électrolyte sulfure ou par leur taille. Dans certains modes de réalisation, les particules d'électrolyte solide sulfure **ES₀** diffèrent des particules d'électrolyte solide sulfure **ES₂** par la nature chimique de l'électrolyte sulfure. Dans certains modes de réalisation, les diamètres médians **Dv50ES₀** et **Dv50ES₂** des particules d'électrolyte solide sulfure **ES₀** et **ES₂** sont différents. Dans de tels modes de réalisation, les particules d'électrolyte sulfure **ES₀** constituent une première population de particules et les particules d'électrolyte sulfure **ES₂** constituent une deuxième population de particules. Une SEL dont les particules d'électrolyte solide sulfure présentent une telle distribution granulométrique bimodale peut être telle que décrite dans la demande de brevet français N°FR2401440. L'électrolyte solide sulfure **ES₀** peut être de même nature chimique que l'électrolyte solide sulfure **ES₂** ou être de nature chimique différente.

Les électrolytes solides sulfures **ES₀** et **ES₂** peuvent être de nature chimique différente de l'électrolyte solide sulfure **ES₁,** être tous les deux de même nature chimique que l'électrolyte solide sulfure **ES₁** ou seul l'un d'entre eux peut être de même nature chimique que l'électrolyte solide sulfure **ES₁.** Ainsi, les électrolytes sulfures **ES₀, ES₁** et **ES₂** peuvent être indépendamment l'un de l'autre, sélectionnés dans le groupe constitué par les sulfures de composition A Li₂S - B P₂S₅ avec 0<A<1 ,0<B<1 et A+B = 1 et leurs dérivés (par exemple avec dopage Lil, LiBr, LiCl, ...) ; les sulfures de structure argyrodite ; les sulfures ayant une structure cristallographique similaire au composé LGPS (Li₁₀GeP₂S₁₂), et leurs dérivés. Dans certains modes de réalisation, l'une des populations de particules d'électrolyte solide sulfure (**ES₀** ou **ES₂**) présente un diamètre médian Dv50 **(Dv50ES₀** ou **Dv50ES₂)** tel que le rapport diamètre médian Dv50 **(Dv50ES₀** ou **Dv50ES₂)/Dv50Si** est compris dans une plage allant de 0,5 à 1,5, de préférence allant de 0,8 à 1. Le rapport peut notamment être égal à 1.

La SEL présente généralement une épaisseur comprise dans la gamme allant de 5 à 250 µm. L'épaisseur de la SEL peut être mesurée par les mêmes méthodes que celles décrites pour mesurer l'épaisseur de l'électrode négative.

Dans certains modes de réalisation, la SEL comprend, ou est constituée, de particules d'électrolytes sulfures **ES₀** et les électrolytes sulfures **ES₀** et **ES₁** sont de même nature chimique, de préférence ils sont sélectionnés dans le groupe constitué par les sulfures de composition A Li₂S - B P₂S₅ avec 0<A<1 ,0<B<1 et A+B = 1 et leurs dérivés (par exemple avec dopage Lil, LiBr, LiCl, ...) ; les sulfures de structure argyrodite ; les sulfures ayant une structure cristallographique similaire au composé LGPS (Li₁₀GeP₂S₁₂), et leurs dérivés. Dans ces modes de réalisation, les particules comprenant du silicium peuvent être des particules constituées de silicium.

Dans certains modes de réalisation, la SEL comprend, ou est constituée, de particules d'électrolytes sulfures **ES₀** et les électrolytes sulfures **ES₀** et **ES₁** sont de même nature chimique et sont de type Li₆PS₅X avec X représentant CI, Br ou I, ou un de leurs mélanges. Dans ces modes de réalisation, les particules comprenant du silicium peuvent être des particules constituées de silicium.

### Electrode positive

Le terme « électrode positive » désigne l'électrode où entrent les électrons, et où arrivent les cations (Li⁺) en décharge.

Dans le cadre de la présente invention, l'électrode positive peut être de tout type connu utilisé dans les accumulateurs Li-ion.

L'électrode positive consiste généralement en un support conducteur utilisé comme collecteur de courant qui est revêtu sur au moins l'une de ses faces d'une formulation d'électrode positive, qui contient typiquement au moins une matière active d'électrode positive, des particules d'électrolyte solide telles que précédemment décrites, un additif carboné conducteur électronique.

Typiquement l'électrode positive comprend également un liant, tels que ceux précédemment cités pour l'électrode négative.

La matière active d'électrode positive n'est pas particulièrement limitée par la présente invention. Ainsi, elle peut être :
- un oxyde lithié d'au moins un métal de transition choisi parmi :
   i) un oxyde lithié de nickel, manganèse et cobalt de formule Li_{w}(NiₓMn_{y}Co_{z}Mₜ)O₂ (NMC) où 0,9≤w≤1,1 ; 0<x ; 0<y ; 0<z ; 0≤t ; M étant choisi dans le groupe constitué de Al, B, Mg, Si, Ca, Ti, V, Cr, Fe, Cu, Zn, Y, Zr, Nb, W, Mo, S, Sr, Ce, Ta, Ga, Nd, Pr, La et des mélanges de ceux-ci ;
   ii) un oxyde lithié de nickel, cobalt et aluminium de formule Li_{w}(NiₓCo_{y}Al_{z}Mₜ)O₂ (NCA) où 0,9≤w≤1,1 ; 0<x ; 0<y ; 0<z ; 0≤t ; M étant choisi dans le groupe constitué de AI, B, Mg, Si, Ca, Ti, V, Cr, Mn, Fe, Cu, Zn, Y, Zr, Nb, W, Mo, S, Sr, Ce, Ta, Ga, Nd, Pr, La et des mélanges de ceux-ci ;
   iii) un composé de formule Li₁₊ₓM₁₋ₓO_{2-y}F_{y} de structure cristalline cubique où 0≤x≤0,5 et 0≤y≤1 et M représente un élément choisi dans le groupe constitué de Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd et Sm et des mélanges de ceux-ci ;
   iv) un oxyde lithié de nickel et de manganèse (NMX) de formule Liₐ(Ni_{1-x-y-z}MnₓCo_{y}M_{z})O₂ avec 0,9≤a≤1,1 ; 0,60≤1-x-y-z<0,80 ; 0<x ; 0≤y≤0,02 ; 0≤z ; et M étant choisi dans le groupe consistant en Al, B, Mg, Si, Ca, Ti, V, Cr, Fe, Cu, Zn, Y, Zr, Nb, W, Mo, S, Sr, Ce, Ga, Ta, Nd, Pr, La et des mélanges de ceux-ci ; et
   v) un oxyde lithié de nickel et de manganèse de formule Li_{w}(NiₓMn_{y}Co_{z}Mₜ)O₂ où 1,1<w≤1,6 ; 0<x ; 0,50≤y<0,80 ; 0≤z≤0,02 ; 0≤t ; M étant choisi dans le groupe constitué de AI, B, Mg, Si, Ca, Ti, V, Cr, Fe, Cu, Zn, Y, Zr, Nb, W, Mo, S, Sr, Ce, Ta, Ga, Nd, Pr, La et des mélanges de ceux-ci ;
   ou
- un phosphate lithié d'au moins un métal de transition choisi parmi :
   a) un phosphate lithié de fer de formule LiₓFe_{1-y}M_{y}PO₄ (LFP), où 0,8≤x≤1,2 ; 0≤y≤0,6 et M est choisi dans le groupe consistant en AI, B, Mg, K, Si, Ca, Ti, V, Cr, Co, Cu, Mn, Ni, Zn, Y, Zr, Nb, W, Pb, Mo, S et des mélanges de ceux-ci ;
   b) un phosphate lithié de manganèse de formule LiₓMn_{1-y}M_{y}PO₄ (LMP), où 0,8≤x≤1,2 ; 0≤y≤0,6 et M est choisi dans le groupe consistant en Al, B, Mg, K, Si, Ca, Ti, V, Cr, Co, Cu, Fe, Ni, Zn, Y, Zr, Nb, W, Pb, Mo, S et des mélanges de ceux-ci ;
   c) un phosphate lithié de manganèse et de fer de formule : LiₓMn_{1-y-z}Fe_{y}M_{z}PO₄ (LMFP) où 0,8≤x≤1,2 ; 0,5≤1-y-z<1; 0<y+z≤0,5 ; 0<y≤0,50 et 0≤z≤0,2 et M est choisi dans le groupe constitué de AI, B, Mg, K, Si, Ca, Ti, V, Cr, Co, Cu, Ni, Zn, Y, Zr, Nb, W, Pb, Mo, S et des mélanges de ceux-ci ; et
   d) un fluorophosphate lithié de vanadium de formule iv) Li₁₊ₓVPO₄F (LVPF) où 0≤x≤0,15, ou à un de ses dérivés de formule Li₁₊ₓV_{1-y}M_{y}PO₄F_{z} (LVMPF) où 0≤x≤0,15, 0<y≤0,5, 0,8≤z≤1,2 et M est choisi dans le groupe consistant en Ti, AI, Y, Cr, Cu, Mg, Mn, Fe, Co, Ni, et Zr ;
   ou
- un mélange de composés a) à d) et i) à v).

Dans certains modes de réalisation, la matière active d'électrode positive est un oxyde lithié de nickel, manganèse et cobalt de formule Li_{w}(NiₓMn_{y}Co_{z}Mₜ)O₂ (NMC) où 0,9≤w≤1,1 ; 0<x ; 0<y ; 0<z ; 0≤t ; M étant choisi dans le groupe constitué de Al, B, Mg, Si, Ca, Ti, V, Cr, Fe, Cu, Zn, Y, Zr, Nb, W, Mo, S, Sr, Ce, Ta, Ga, Nd, Pr, La et des mélanges de ceux-ci.

L'additif carboné conducteur électronique d'électrode positive est généralement choisi parmi le graphite, le noir de carbone, le noir d'acétylène, la suie, le graphène, les nanotubes de carbones, les fibres de carbone, telles que les fibres de carbone vapodéposées (VGCF), ou un mélange de ceux-ci.

La nature du collecteur de courant n'est pas limitée. Les collecteurs de courant classiquement utilisés pour les électrodes positives pour les éléments électrochimiques au lithium peuvent ainsi être envisagés. Le collecteur de courant de la couche d'électrode positive est typiquement constitué d'aluminium.

Le collecteur de courant de l'électrode positive peut également être revêtu, sur l'une de ses faces ou sur ses deux faces, d'un revêtement destiné à améliorer la conductivité électronique entre la couche de matériau d'électrode positive et le support conducteur. Le matériau de revêtement peut être choisi dans le groupe constitué par le carbone amorphe, le graphite, les fibres de carbone, les nanotubes de carbone et leurs mélanges.

L'électrode positive présente généralement une épaisseur comprise dans la gamme allant de 10 à 200 µm, de préférence de 40 à 150 µm. L'épaisseur de l'électrode positive peut être mesurée par les mêmes méthodes que celles décrites pour mesurer l'épaisseur de l'électrode négative.

Dans certains modes de réalisation, l'élément électrochimique de la présente invention est tel que :
- la couche d'électrolyte solide présente une épaisseur allant de 5 à 250 µm, et/ou
- l'électrode négative présente une épaisseur allant de 20 à 60 µm, et/ou
- l'électrode positive présente une épaisseur allant de 100 à 200 µm.

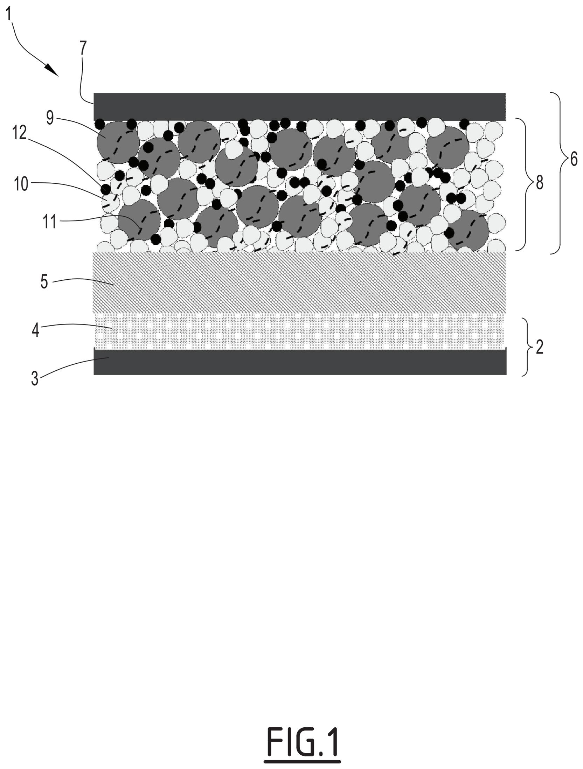

Une représentation schématique d'un élément électrochimique selon la présente invention est présentée à la figure 1. L'élément électrochimique (**1**) comprend :
- une électrode positive (**2**) comprenant un collecteur de courant (**3**) et une formulation d'électrode positive (**4**) ;
- une couche d'électrolyte solide (SEL) (**5**);
- une électrode négative (**6**) comprenant un collecteur de courant (**7**) et une couche de matériau d'électrode négative (**8**).

La couche de matériau d'électrode négative (**8**) représentée à la figure 1 comprend :
- des particules (**9**) d'un électrolyte solide sulfure **ES₁** présentant un diamètre médian **Dv50ES₁,**
- des particules (**10**) comprenant du silicium et présentant un diamètre médian **Dv50Si,**
- un liant (**11**), et
- un additif carboné conducteur électronique (**12**).

L'élément électrochimique convient au stockage d'énergie, notamment dans des dispositifs mobiles, stationnaires (pour le stockage des énergies renouvelables par exemple), spatiaux ou aéronautique notamment.

L'élément électrochimique peut être préparé par tout procédé adapté connu de la personne du métier. En particulier, l'élément électrochimique peut être préparé par un procédé comprenant les étapes suivantes :
a. préparation d'une électrode négative par application sur au moins une face d'un collecteur de courant d'une couche de matériau d'électrode négative comprenant au moins:
   ∘ des particules d'un électrolyte solide sulfure **ES₁** présentant un diamètre médian **Dv50ES₁,**
   o des particules comprenant du silicium et présentant un diamètre médian **Dv50Si,**
   o un liant, et
   o éventuellement un additif carboné conducteur électronique,
   le rapport **Dv50ES₁/Dv50Si** est compris dans une gamme allant de 1,6 à 2,5, de préférence de 1,8 à 2,2, les diamètres médians étant mesurés par granulométrie à diffraction laser ;
b. superposition de l'électrode négative, de la couche d'électrolyte solide et de l'électrode positive pour donner un élément électrochimique de type tout solide.

Dans ce mode de réalisation, l'électrode négative, la couche d'électrolyte solide et l'électrode positive sont préparées de manière séparée puis assemblées.

De manière alternative, le procédé de préparation d'un élément électrochimique selon l'invention peut comprendre les étapes suivantes :
a. préparation d'une électrode négative comme précédemment décrit ;
b. enduction d'une couche d'électrolyte solide sur l'électrode négative et/ou l'électrode positive ;
c. superposition de l'électrode négative et positive pour donner un élément électrochimique de type tout solide.

La présente invention concerne également un module électrochimique comprenant l'empilement d'au moins deux éléments électrochimiques selon l'invention, chaque élément électrochimique étant connecté électriquement avec un ou plusieurs autre(s) élément(s). Le terme « module » désigne donc ici l'assemblage de plusieurs éléments électrochimiques, les assemblages pouvant être en série et/ou parallèle.

La présente invention concerne également un accumulateur ou batterie comprenant un ou plusieurs modules selon l'invention.

Le terme « batterie » désigne l'assemblage d'un ou plusieurs modules selon l'invention.

### EXEMPLES

### Exemple 1

Des électrodes négatives ont été préparées en boîte à gants sous atmosphère inerte. Les électrodes négatives contiennent des particules de silicium comme matière active, un électrolyte solide sulfure de type argyrodite (ES), un additif carboné conducteur électronique et un liant.

Deux granulométries différentes pour l'ES de l'électrode négative (**ES₁**) ont été testées :
- ES dont les particules présentent un diamètre médian Dv50 de 4 µm ;
- ES dont les particules présentent un diamètre médian Dv50 de 7 µm.

Les particules de silicium présentent un diamètre médian Dv50 de 4 µm.

Le comportement des électrodes négatives préparées a été évalué en configuration demi-cellule avec une contre-électrode Li-In.

La couche d'électrolyte solide (SEL), séparant l'électrode négative et la contre-électrode, est réalisée avec le même électrolyte sulfure (**ES₀**) que celui de l'électrode négative.

Les deux configurations suivantes ont été évaluées :

**[Tableau 1]**

| | Configuration 1 | Configuration 2 |
|---|---|---|
| Electrode négative | **ES₁** : ES Dv50 =7 µm | **ES₁ :** ES Dv50 =4 µm |
| | Si Dv50= 4 µm | Si Dv50 = 4 µm |
| SEL | **ES₀** : ES Dv50 =7 µm | **ES₀** : ES Dv50 =4 µm |

Les performances en cyclage des demi-cellules ont été évaluées. Les résultats des tests de performance sont présentés à la figure 2 (cercle : électrode négative avec configuration 1 ; losange : électrode négative avec configuration 2). Pour chaque test, au moins 3 expériences ont été réalisées, pour garantir la reproductibilité.

Les résultats montrent que la demi-cellule présentant la configuration 1 permet d'atteindre une capacité proche de la capacité théorique du silicium (3580 mAh/g Si). La demi-cellule présentant la configuration 2 permet quant à elle d'atteindre seulement une capacité de 2700 mAh/g Si, soit 25% de moins que la configuration 1.

Les résultats montrent également qu'une électrode négative présentant la configuration 1 (différence de taille de particules au sein de l'électrode négative) présente une meilleure cyclabilité avec une rétention de capacité de 70% après 100 cycles contre 30% lorsque l'électrode négative présente la configuration 2 (sans différence de taille de particules au sein de l'électrode négative).

### Exemple 2

Des électrodes négatives ont été préparées en boîte à gants sous atmosphère inerte. Les électrodes négatives contiennent des particules de silicium comme matière active, un électrolyte solide sulfure de type argyrodite (ES), un additif carboné conducteur électronique et un liant.

L'ES suivant (**ES₁**) est employé dans l'électrode négative :
- ES dont les particules présentent un diamètre médian Dv50 de 7 µm.

Les particules de silicium présentent un diamètre médian Dv50 de 4 µm.

L'électrode négative présente donc la structure de la configuration 1 de l'exemple 1.

Le comportement des électrodes négatives préparées a été évalué en configuration cellule complète avec une électrode positive comprenant à titre de matière active un oxyde lithié de nickel, manganèse et cobalt (NMC).

La couche d'électrolyte solide (SEL), séparant l'électrode négative et l'électrode positive, est réalisée avec un électrolyte sulfure de même nature que l'ES de l'électrode négative. Deux granulométries différentes pour l'ES de la SEL (ES₀) ont été testées :
- ES dont les particules présentent un diamètre médian Dv50 de 4 µm ;
- ES dont les particules présentent un diamètre médian Dv50 de 7 µm.

Ainsi, les deux configurations suivantes ont été évaluées :

**[Tableau 2]**

| | Configuration 3 | Configuration 4 |
|---|---|---|
| Electrode négative | **ES₁** : ES Dv50 =7 µm | **ES₁** : ES Dv50 = 7 µm |
| | Si Dv50= 4 µm | Si Dv50 = 4 µm |
| SEL | **ES₀ :** ES Dv50 = 7 µm | **ES₀ :** ES Dv50 = 4 µm |

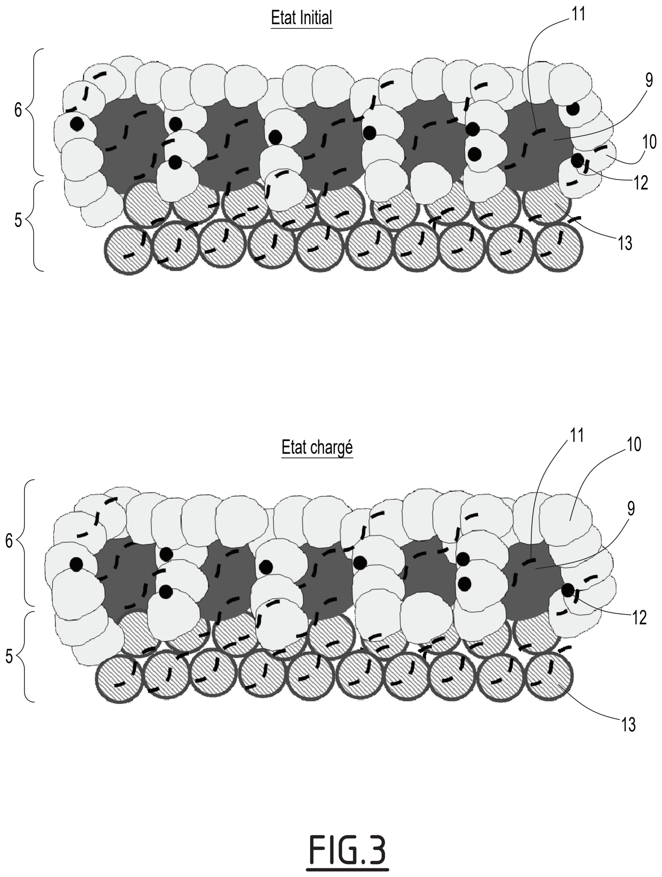

Une illustration schématique de l'interface entre la SEL et l'électrode négative d'un élément électrochimique selon la configuration 4 est présentée à la figure 3 (particules d'électrolyte sulfure (**13**) de la SEL (**5**) ; électrode négative (**6**) ; particules d'électrolyte solide sulfure (**9**) de l'électrode négative (**6**) ; particules comprenant du silicium (**10**) ; liant (**11**) ; additif carboné conducteur électronique (**12**)).

Les performances en cyclage des cellules ont été évaluées. Les résultats des tests de performance sont présentés à la figure 4 (cercle : configuration 3 ; losange : configuration 4). Pour chaque test, au moins 3 expériences ont été réalisées, pour garantir la reproductibilité.

Les résultats montrent que la cellule présentant la configuration 4 présente une meilleure cyclabilité avec une rétention de capacité de 95% après 150 cycles. La cellule présentant la configuration 3 présente une capacité qui chute rapidement pour atteindre environ 70% de rétention de capacité après 140 cycles.

Comme le montre la figure 3, lors de la charge (passage de l'état initial à l'état chargé), les particules de silicium (**10**) gonflent. Les contacts entre les particules de silicium (**10**) de l'électrode négative et les particules d'électrolyte sulfure (**13**) de la SEL (**5**) sont alors tout particulièrement favorisés lorsque les particules de silicium (**10**) ont un diamètre médian proche voire égal au diamètre médian de l'électrolyte sulfure (**13**) de la SEL (**5**). L'interface entre l'électrode négative et la SEL est de meilleure qualité (meilleure continuité), offrant une meilleure reproductibilité des cycles de charge/décharge.

## Revendications

1. Elément électrochimique de type tout solide comprenant une électrode positive, une électrode négative et une couche d'électrolyte solide sulfure comprenant des particules d'un électrolyte sulfure **ES₀** séparant l'électrode positive et l'électrode négative,
dans lequel l'électrode négative comprend un collecteur de courant et une couche de matériau d'électrode négative appliquée sur au moins une face du collecteur, ladite au moins une face faisant face à la couche d'électrolyte solide sulfure,
dans lequel la couche de matériau d'électrode négative comprend au moins:
- des particules d'un électrolyte solide sulfure **ES₁** et présentant un diamètre médian **Dv50ES₁,**
- des particules comprenant du silicium et présentant un diamètre médian **Dv50Si,**
- un liant, et
- éventuellement un additif carboné conducteur électronique;
**caractérisé en ce que** le rapport **Dv50ES₁/Dv50Si** est compris dans une gamme allant de 1,6 à 2,5, de préférence de 1,8 à 2,2, les diamètres médians étant déterminés par granulométrie à diffraction laser.

2. Elément électrochimique selon la revendication 1 dans lequel les particules d'électrolyte solide sulfure **ES₀** présentent un diamètre médian **Dv50ES₀** tel que le rapport **Dv50ES₀/Dv50Si** est compris dans une gamme allant de 0,5 à 1,5, de préférence de 0,8 à 1, notamment le rapport **Dv50ES₀/Dv50Si** est égal à 1.

3. Elément électrochimique selon la revendication 1 ou 2 dans lequel les particules d'électrolyte solide sulfure **ES₀** présentent un diamètre médian **Dv50ES₀** différent de **Dv50ES₁.**

4. Elément électrochimique selon l'une quelconque des revendications 1 à 3 dans lequel la couche d'électrolyte solide sulfure comprend, outre les particules d'électrolyte solide sulfure **ES₀** qui constituent une première population de particules, une deuxième population de particules d'un électrolyte solide sulfure **ES₂,** les diamètres médians **Dv50ES₀** et **Dv50ES₂** respectivement de la première et de la deuxième population de particules étant différents.

5. Elément électrochimique selon l'une quelconque des revendications 1 à 4 dans lequel les électrolytes sulfures **ES₀, ES₁ et ES₂** sont, indépendamment l'un de l'autre, sélectionnés dans le groupe constitué par les sulfures de composition A Li₂S - B P₂S₅ avec 0<A<1 ,0<B<1 et A+B = 1 et leurs dérivés (par exemple avec dopage Lil, LiBr, LiCl, ...) ; les sulfures de structure argyrodite ; les sulfures ayant une structure cristallographique similaire au composé LGPS (Li₁₀GeP₂S₁₂), et leurs dérivés.

6. Elément électrochimique selon l'une quelconque des revendications 1 à 3 dans lequel les électrolytes sulfures **ES₀** et **ES₁** sont de même nature chimique, de préférence sélectionnés dans le groupe constitué par les sulfures de composition A Li₂S - B P₂S₅ avec 0<A<1 ,0<B<1 et A+B = 1 et leurs dérivés (par exemple avec dopage Lil, LiBr, LiCl, ...) ; les sulfures de structure argyrodite ; les sulfures ayant une structure cristallographique similaire au composé LGPS (Li₁₀GeP₂S₁₂), et leurs dérivés.

7. Elément électrochimique selon l'une quelconque des revendications 1 à 3 dans lequel les électrolytes solide sulfure **ES₀** et **ES₁** sont de même nature chimique et sont de type Li₆PS₅X avec X représentant CI, Br ou I, ou un de leurs mélanges.

8. Elément électrochimique selon l'une quelconque des revendications 1 à 7 dans lequel les particules comprenant du silicium sont des particules constituées de silicium.

9. Elément électrochimique selon l'une quelconque des revendications 1 à 8 dans lequel le diamètre médian **Dv50Si** des particules comprenant du silicium varie de 1 à 10 µm, de préférence de 2 à 5 µm.

10. Elément électrochimique selon l'une quelconque des revendications 1 à 9 dans lequel le liant est sélectionné dans le groupe constitué par le polyfluorure de vinylidène (PVDF) et ses copolymères, le polytétrafluoroéthylène (PTFE) et ses copolymères, le polyacrylonitrile (PAN), le poly(méthyl)ou (butyl)méthacrylate, le polychlorure de vinyle (PVC), le poly(vinyl formal), le polyester, les polyéthers blocs amides, les polymères d'acide acrylique, d'acide méthacrylique, d'acrylamide, d'acide itaconique, d'acide sulfonique, les élastomères et les composés cellulosiques.

11. Elément électrochimique selon l'une quelconque des revendications 1 à 10 dans lequel la couche de matériau d'électrode négative comprend au moins :
- de 5 à 60%, de préférence de 25 à 50%, de préférence de 40 à 50% en poids de particules d'un électrolyte solide sulfure **ES₁,**
- de 40 à 94,5%, de préférence de 40 à 70%, en poids de particules comprenant du silicium,
- de 0,5 à 10%, de préférence de 1 à 8%, en poids d'un liant, et
- éventuellement de 0,1 à 5%, de préférence de 0,1 à 4%, en poids d'un ou plusieurs additif(s) carboné(s) conducteur(s) électronique(s),
les % en poids étant exprimés par rapport au poids total de la couche de matériau d'électrode négative.

12. Procédé de préparation d'un élément électrochimique de type tout solide selon l'une quelconque des revendications 1 à 11 comprenant les étapes suivantes :
(a) préparation d'une électrode négative par application sur au moins une face d'un collecteur de courant d'une couche de matériau d'électrode négative comprenant au moins :
∘ des particules d'un électrolyte solide sulfure **ES₁** et présentant un diamètre médian **Dv50ES₁,**
∘ des particules comprenant du silicium et présentant un diamètre médian **Dv50Si,**
∘ un liant, et
∘ éventuellement un additif carboné conducteur électronique,
le rapport **Dv50ES₁/Dv50Si** étant compris dans une gamme allant de 1,6 à 2,5, de préférence de 1,8 à 2,2, les diamètres médians étant déterminés par granulométrie à diffraction laser ; et
(b) soit superposition de l'électrode négative, de la couche d'électrolyte solide et de l'électrode positive pour donner un élément électrochimique de type tout solide ;
(c) soit enduction d'une couche d'électrolyte solide sur l'électrode négative et/ou l'électrode positive et superposition de l'électrode négative et de l'électrode positive pour donner un élément électrochimique de type tout solide.

13. Utilisation d'un élément électrochimique selon l'une quelconque des revendications 1 à 11 pour maintenir une rétention de capacité d'au moins 80% après au moins 150 cycles de charge/décharge.
